Europäisches Patentamt

European Patent Office

Office européen des brevets

(11) Veröffentlichungsnummer: **0 297 148 B1**

# EUROPÄISCHE PATENTSCHRIFT

(45) Veröffentlichungstag der Patentschrift: **12.06.91**

(51) Int. Cl.5: **E01H 5/09**, A01D 34/00

(21) Anmeldenummer: **87109149.2**

(22) Anmeldetag: **25.06.87**

(54) Schneeräumeinrichtung.

(43) Veröffentlichungstag der Anmeldung:
**04.01.89 Patentblatt 89/01**

(45) Bekanntmachung des Hinweises auf die
Patenterteilung:
**12.06.91 Patentblatt 91/24**

(84) Benannte Vertragsstaaten:
**AT BE CH DE FR GB IT LI LU NL SE**

(56) Entgegenhaltungen:
**US-A- 2 977 694**
**US-A- 3 064 369**
**US-A- 3 286 376**

(73) Patentinhaber: **Kahlbacher, Anton**
**Aschbachstrasse 8**
**A-6370 Kitzbühel(AT)**

(72) Erfinder: **Kahlbacher, Anton**
**Aschbachstrasse 8**
**A-6370 Kitzbühel(AT)**

(74) Vertreter: **Hefel, Herbert, Dipl.-Ing.**
**Egelseestrasse 65a Postfach 61**
**A-6800 Feldkirch(AT)**

## Beschreibung

Die Erfindung bezieht sich auf eine Schneeräumeinrichtung mit einem stirnseitig offenen, in Seitensicht keilförmigen, nach unten offenen Gehäuse mit den Merkmalen des Oberbegriffes des Patentanspruches 1.

Es sind bereits verschiedene Ausführungen von Klein-Schneeräumeinrichtungen bekannt geworden, welche mit Rasenmähern kombinierbar sind.

Bei einer bekannten Schneeräumeinrichtung (US-A 29 77 694) ist ein keilförmiges Gehäuse vorgesehen, auf welchem direkt ein Motor aufgesetzt ist, welcher ein in dem keilförmigen Gehäuse angeordnetes Schneidrad antreibt. Dieses Schneidrad ist nach Art eines Rasenmäherschneidblattes ausgeführt. Eine solche Anordnung kann kaum den zugeführten Schnee zerschneiden und ordnungsgemäß auswerfen.

Aus der US-A-3064 369 ist ein Rasenmäher bekannt, der in einen Schneepflug umwandelbar ist. Dazu ist hier vorgesehen, daß das zum Mähen dienende Schneidmesser entfernt und durch ein Flügelrad ersetzt wird, das ebenso wie das entfernte Schneidmesser innerhalb des Gehäuses des Rasenmähers liegt. An der Unterseite des Gehäuses wird eine Platte angeschraubt mit einer zentralen Öffnung unterhalb des Flügelrades und diese zentrale Öffnung ist von einem V-förmigen Blechstreifen eingesäumt, dessen offene Seite in Fahrtrichtung des Rasenmähers zeigt. Das Flügelrad ist noch zusätzlich mit paarweise vorgesehenen, nach unten ragenden Stiften bestückt, die die Aufgabe haben, den sich im Scheitel des V-förmigen Blechstreifens ansammelnden Schnee aufzurühren, um so zu verhindern, daß der Schnee hier in diesem Bereich zusammenpackt. Abgesehen davon, daß das Gerät überhaupt nur bei einer Schneedecke von wenigen Zentimetern eingesetzt werden könnte, wird in der Praxis nicht einmal Pulverschnee von dem im Mähergehäuse rotierenden Flügelrad angehoben und ausgeworfen werden, geschweige denn ein Schnee mit hohem Nässegehalt.

Die US-A-3286 376 zeigt und beschreibt ebenfalls ein Kombinationsgerät, hier sind zwei verschiedene Ausführungsformen erläutert. Das erste Ausführungsbeispiel nach den Fig. 1 bis 4 entspricht in allen wesentlichen Punkten dem erstbesprochenen Kombinationsgerät nach der US-A-3064 369: Auch hier wird das Schneidmesser durch ein Flügelrad ersetzt, auch hier ist an der Unterseite des Mähergehäuses eine Platte festgeschraubt mit einer zentralen Öffnung und auch hier ist diese zentrale Öffnung von einem V-förmigen Leitblechstreifen besäumt, der nach vorne hin offen ist. Auch hier sind am Flügelrad nach unten ragende Stifte vorgesehen, die den im Scheitel dieses V-förmigen Leitblechstreifens sich ansammelnden Schnee aufrühren sollen. Bei der zweiten Ausführungsform ist ein V-förmiger Blechkasten vorgesehen mit einer dreieckförmigen Unterseite, der Blechkasten ist nach vorne hin offen. Hier ist im verengten Teil des Blechkastens ein kleiner Rührflügel drehbar gelagert. Vor der Mündungsöffnung des Blechkastens liegt eine Löffeloder Flügelwalze, die ebenfalls drehbar gelagert ist. Sowohl zum Antrieb des Rührflügels wie auch der Flügelwalze ist hier ein Keilriementrieb vorgesehen, der zum Teil seitlich, zum Teil unterhalb des erwähnten Blechkastens verläuft. Dabei wird die Antriebskraft über die Welle des Rührers eingeleitet, die direkt mit der Motorwelle des aufgesetzten Rasenmähers gekoppelt ist. Der unterhalb der Bodenplatte und seitlich des V-förmigen Gehäuses geführte Riementrieb ist für eine Schneeräumung denkbar ungeeignet. Es läßt sich möglicherweise nicht verhindern, daß Schnee in die Riemen- und Umlenkscheiben umläuft mit der Folge, daß der Riemen entweder zu rutschen beginnt oder überhaupt aus den Führungsnuten der Antriebs- und Umlenkscheiben ausgehoben wird. Obwohl hier bei diesem Gerät nur zwei Wellen angetrieben werden, müssen vier Rollen- oder Riemenscheiben montiert werden, die alle im unmittelbaren Schneebereich laufen. Abgesehen von diesen Antriebsschwierigkeiten ist es nicht möglich, mittels des eingesetzten Flügelrades, das auf der Motorwelle des Rasenmähers anstelle des Schneidmessers montiert ist, den sich im keilförmigen Zwickel ansammelnden Schnee durch die schon oben erwähnte mittige Öffnung hochzuziehen und dann noch seitlich auszublasen.

Von diesem Stand der Technik geht die Erfindung aus und sie schlägt nun jene Maßnahmen vor, die Gegenstand und Inhalt des kennzeichnenden Teiles des Patentanspruches 1 sind. Dank dieses Vorschlages wird aus einem Rasenmäher ein Kombinationsgerät geschaffen, das auch zur Schneeräumung eingesetzt werden kann. Es wird dabei nicht übersehen, daß für die Schneeräumung durchaus handgeführte und taugliche Geräte bereits vorgeschlagen wurden (US-A-2977 694), die jedoch ausschließlich und allein für die Schneeräumung eingesetzt werden können und die kein Kombinationsgerät im Sinne der gegenständlichen Erfindung sind. Durch diese erfindungsgemäßen Maßnahmen hat der Schnee nur einen kurzen Weg zwischen seinem Eintritt in das keilförmige Gehäuse und seinem nachfolgenden Auswerfen zurückzulegen. Der aufgenommene Schnee gelangt also unmittelbar in den Wirkungsbereich des Wurfrades und wird daher sogleich ausgetragen, dies im Gegensatz zu der bekannten Ausführung, wo der Schnee auf verwinkelten Wegen nach außen gezwungen werden muß. Durch diese erfindungsgemäßen Maßnahmen kann auch das Wurfrad optimal zum Abgraben des zugeführten Schnees und zum Auswurf desselben konstruiert werden. Es ist also möglich, das Wurfrad so auszuführen, daß die abstehenden Flügel auch im hinteren keilförmigen Raum des Gehäuses bis nahe zu Boden führen.

Die erfindungsgemäße Maßnahme schafft eine konstruktiv einfache Schneeräumeinrichtung, die nur mit wenigen Handgriffen und ohne große Umbauarbeiten an einen Rasenmäher als Antriebseinrichtung angesetzt werden kann. Dadurch wird ein Kombinationsgerät erhalten, das nicht nur für den praktischen Einsatz verwendet werden kann, sondern auch ohne Umbau des Rasenmähers verwendbar ist.

Weitere erfindungsgemäße Merkmale und besondere Vorteile werden in der nachstehenden Beschreibung anhand der Zeichnungen noch näher erläutert. Es zeigen:

Fig. 1    eine Seitenansicht der Schneeräumeinrichtung mit aufgesetztem Rasenmäher, teilweise aufgeschnitten dargestellt;

Fig. 2    eine Draufsicht auf das Gehäuse ohne aufgesetzten Rasenmäher;

Fig. 3    ein Wurfrad der Schneeräumeinrichtung in Ansicht von unten;

Fig. 4    eine Kupplung zwischen dem Antriebsmotor und dem Getriebe.

Die Schneeräumeinrichtung besteht im wesentlichen aus einem stirnseitig offenen keilförmigen Gehäuse 3, einem an einen Antriebsmotor kuppelbaren Wurfrad 4 sowie einer Auswurföffnung 5. Das wesentliche Merkmal dieser Schneeräumeinrichtung liegt darin, daß das Wurfrad 4 innerhalb dieses keilförmigen Raumes des Gehäuses 3 angeordnet ist und daß die Auswurföffnung in der Ebene des rotierenden Wurfrades 4 an der offenen Stirnseite des Gehäuses 3 vorgesehen ist.

Das Gehäuse 3 ist stirnseitig, also im in Räumrichtung 7 gesehen vorderen Bereich, und nach unten hin offen ausgeführt. Die Schneezufuhr wird dadurch in keiner Weise behindert. Es muß daher auch nicht vom Gehäuse selbst bereits der am Boden liegende Schnee abgehoben werden, da dieser bis zum Eintreffen im Bereich des Wurfrades 4 sozusagen am Boden liegen bleiben kann.

Damit eine große Räumbreite erzielt wird und außerdem auch eine größere Schneehöhe berücksichtigt werden kann, kann das Gehäuse 3 in Richtung zur stirnseitigen Öffnung 8 hin erweitert ausgeführt sein. Die obere Begrenzungswand 9 des Gehäuses 3 schließt mit dem unteren Abschlußrand 10 desselben einen spitzen Winkel von mehr als 5°, vorzugsweise von etwa 12°, ein. Bei der dargestellten Konstruktion verlaufen die beiden Seitenbegrenzungen 6 und 11 parallel zueinander, was eine sehr einfache Konstruktion ergibt. Es kann aber auch vorteilhaft sein, wenn die Seitenbegrenzungen 6 und 11 des Gehäuses 3 von der Höhe des Wurfrades 4 ausgehend in Räumrichtung 7 zueinander divergieren, so daß sich dadurch die Räumbreite vergrößert. Dabei kann die eine Seitenbegrenzung 11 des Gehäuses 3 in Räumrichtung verlaufen, die gegenüberliegende Seitenbegrenzung 6 spitzwinklig dazu ausgerichtet sein.

Das Gehäuse 3 ist als fahrbarer und/oder gleitfähiger Untersatz für einen an der Oberseite des Gehäuses 3 befestigbaren Rasenmäher 1 ausgeführt. Es ist dadurch möglich, den Rasenmäher ohne die Laufräder zu verwenden, so daß jedes Rasenmäherfabrikat benutzt werden kann.

Das Gehäuse 3 ist als auf wenigstens zwei Laufrädern 14 und 15 verfahrbarer Untersatz ausgeführt. Der untere Abschlußrand 10 der Seitenbegrenzungen 6, 11 des Gehäuses kann beispielsweise in Form von Gleitkufen ausgeführt sein. Die Laufräder 14 und 15 sind über Halterungen 16 am Gehäuse 2 befestigt. Es wäre auch die Anordnung eines zusätzlichen, der Stirnseite zugewandten Laufradpaares möglich, was die Verfahrbarkeit des Gerätes erleichtert. Durch die Ausbildung des Gehäuses 3 als fahrbarer Untersatz für einen Rasenmäher 1 ist eine leichte Verschiebbarkeit der gesamten Schneeräumeinrichtung samt aufgebautem Rasenmäher möglich und außerdem kann bei Bedarf in einfacher Weise die Arbeitsrichtung geändert werden. Es wird dann lediglich durch entsprechenden Druck auf den Handhabungshebel 17 des Rasenmähers 1 das Gewicht auf die Räder 14 und 15 bzw. das entsprechende zusätzliche Laufrad verlagert, wodurch dann die gesamte Anordnung verschwenkt wird.

Aus der Zeichnung ist ersichtlich, daß zusätzlich zu den Laufrädern 14 und 15 Gleitkufen 19 und 20 vorgesehen sind, so daß das Gerät auch auf einer Schneefahrbahn und hier insbesondere auf relativ weichem Schnee verfahren werden kann. Diese Gleitkufen 19, 20 sind in Räumrichtung ausgerichtet und an ihrem vorderen Ende aufgebogen. Diese Gleitkufen können zur Verbesserung der Gleitfähigkeit und auch zum Zweck des leichteren Verschiebens der Schneeräumeinrichtung mit einer Kunststoffauflage versehen sein.

Wie schon ausgeführt, schließt an die stirnseitig am Gehäuse 3 vorgesehene Auswurföffnung 5 ein Auswurfkanal 12 an. Es ist dadurch möglich, den Schnee gerichtet auszuwerfen und außerdem die günstigste Wurfgeschwindikeit nach einem ausreichenden Beschleunigungsweg zu erzielen. Um die Auswurfweite bzw. Auswurfhöhe zu regeln, ist an der Auswurföffnung 5 bzw. im Bereich des freien Endes des Auswurfkanals 12 eine verschwenkbar gelagerte Auswurfklappe 13 vorgesehen. Über einen an einer Tragschelle 28 der verstellbaren Stütze 41 gehaltenen Verstellhebel 32 ist diese Auswurfklappe 13 mit einem Handbetätigungshebel 32' verbunden, welcher an einer nachstehend noch näher erläuterten Niederhalteeinrichtung gelagert ist. Durch diesen Verstellhebel 32 kann die Auswurfklappe 13 in verschiedenen Raststellungen oder auch stufenlos eingestellt werden, wobei es zweckmäßig ist, die Stellung des Handbetätigungshebels 32' und somit der Auswurfklappe 13 in der gewünschten Lage festzustellen. Mit einem einzigen Verstellhebel 32 und einem Handbetätigungshebel 32' kann sowohl die Auswurfklappe 13 verschwenkt als auch der Auswurfkamin 12 um seine Achse verdreht werden, so daß nicht nur die Auswurfhöhe, sondern auch die gewünschte seitliche Auswurfrichtung in Zusammenwirken des Auswurfkamins 12 und der Auswurfklappe 13 gewählt werden kann.

Die Seitenbegrenzungen 6, 11 des Gehäuses 3 folgen am rückwärtigen Abschluß des Gehäuses dem Radius des rotierenden Wurfrades 4, so daß der Schnee nach dem Erfassen durch das Wurfrad 4 im Bereich der Wurfschaufeln des Wurfrades 4 verbleibt und daher entsprechend beschleunigt der Auswurföffnung 5 zugeführt werden kann und so der Schnee in optimaler Weise ausgeworfen wird.

Am unteren Randbereich der Seitenbegrenzungen 6 und 11 sowie des kreisbogenförmigen Abschnittes 42 ist ein den Randbereich nach unten hin überragender, flexibler Streifen 25 angebracht. Es wäre denkbar, diesen Streifen 25 lediglich im kreisbogenförmigen Abschnitt 42 der Seitenbegrenzung des Gehäuses 3 anzuordnen. Dadurch wird die Räumung verbessert.

In einer Öffnung an der oberen Begrenzungswand 9 des Gehäuses 3 ist ein Getriebe 30 befestigt, welches über ein elastisches Zentrierstück 29 in Form einer Gummihülse mit der Antriebswelle des Motors des Rasenmähers 1, und zwar mit der Rasenmähermesser-Fixierung 22, verbindbar ist. Durch dieses Zentrierstück 29 werden Gehäuse 3 und Rasenmäher 1 ausreichend zentriert. Eine Zweistiftkupplung 23, welche an den radial auskragenden Messerblättern (18) des Rasenmähers anliegt, dient als Kupplung für die Übertragung der Antriebskraft. Ein Getriebe sorgt für eine optimale Drehzahl des Wurfrades 4, so daß die Wurfleistung entsprechend der Motorleistung optimiert werden kann. In der Regel weisen Rasenmähermotoren ca. 3 000 bis 4 000 Umdrehungen pro Minute auf, wobei die optimale Drehzahl des Wurfrades 4 bei einer Auswurfweite von ca. 4 bis 5 Metern bei ca. 700 bis 800 Umdrehungen pro Minute liegen soll.

Der Rasenmäher muß nur auf das Gehäuse 3 aufgesetzt werden, wobei auf die Abtriebswelle ein elastisches Kupplunsstück aufgesetzt wird. Das Gegenstück ist dann an dem nach oben ragenden Wellenstummel der Antriebswelle 31 des Getriebes 30 vorgesehen, wobei die Verbindung mit einem Elastik-Zwischenstück die Stoßwirkung abschwächen soll.

Bei dem gezeigten Ausführungsbeispiel ist anstelle eines Zahnradgetriebes 30 ein Keilriemengetriebe mit einem Keilriemenspanner 26 vorgesehen.

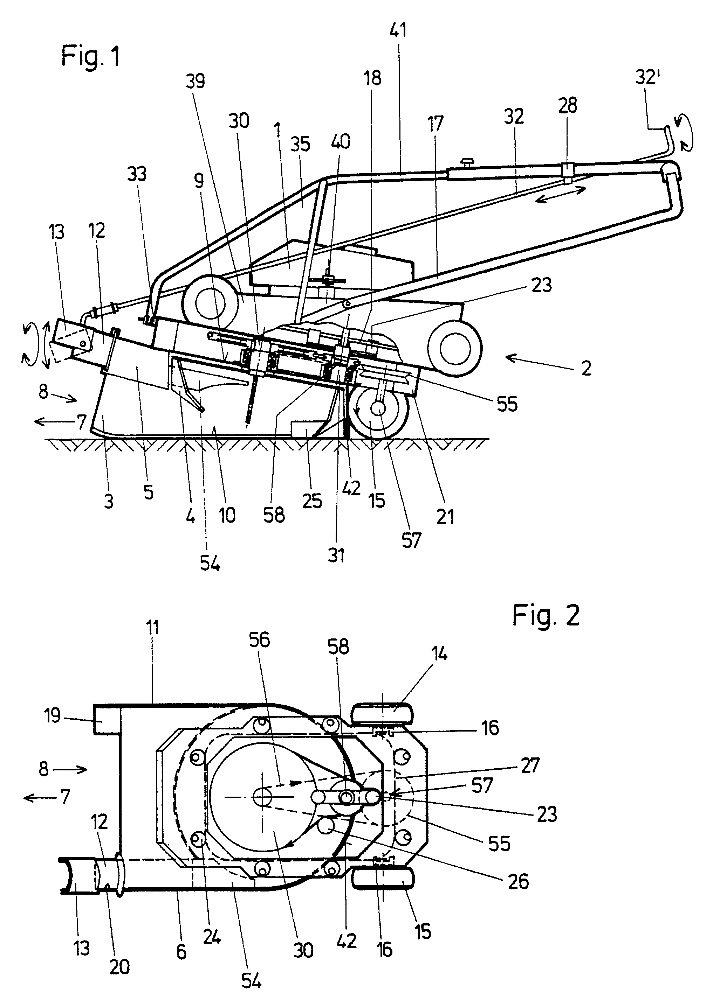

Aus Fig. 1 ist ferner ersichtlich, daß auf das Gehäuse 3 ein Getriebeschutzblech 21 aufgesetzt ist, welches den Raum zwischen dem aufgesetzten Rasenmäher 1 und der oberen Begrenzungswand 9 abschließt.

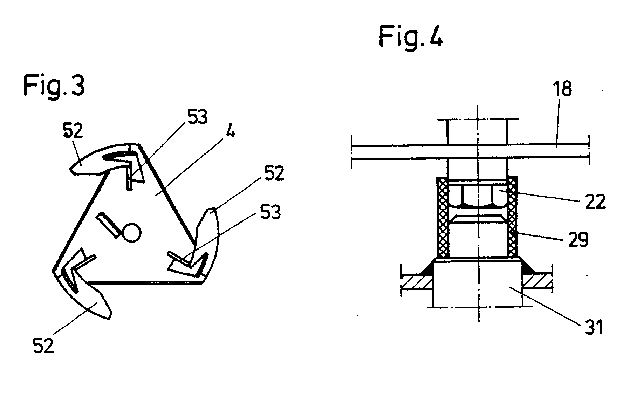

Aus Fig. 3 ist ein Ausführungsbeispiel eines Wurfrades ersichtlich, wobei durch eine solche Ausbildung eine sehr kraftsparende Schleuderform geschaffen worden ist. Der Schnee wird sofort von den Schaufeln 52 des Wurfrades 4 erfaßt und auch zur Auswurföffnung 5 befördert. Die Schaufeln 52 sind dabei so konstruiert und an ihren Enden abgebogen, daß sie praktisch bis zur Bodenbegrenzung des zu befahrenden Geländes gezogen sind und daher den angefallenen Schnee restlos wegräumen können. Die Windflächen 53 ermöglichen einen gleichmäßigen Auswurf des Räumgutes.

Die Befestigung des Rasenmähers 1 auf dem Gehäuse 3 kann in einfacher Weise durch am Gehäuse vorgesehene Aufhänge-, Einhänge-oder Klemmvorrichtungen bewerkstelligt werden. Bei der gezeigten Ausführungsform sind am Gehäuse 3 Einhängelaschen 33 vorgesehen, welche zum Fixieren einer von oben an einen aufgesetzten Rasenmäher 1 anpreßbaren Niederhalteeinrichtung 35 dienen.

Die Einhängelaschen 33 sowie die Niederhalteeinrichtung 35 sind jeweils paarweise an beiden Seitenbereichen des Gehäuses 3 angeordnet. Um eine ordnungsgemäße Anpreßkraft der Niederhalteeinrichtung 35 unter entsprechender Federwirkung zu erreichen, wird zweckmäßig ein Preßteil, vorzugsweise ein Gummipuffer 40, angeordnet. Durch diese Ausgestaltung muß der Rasenmäher lediglich auf das als fahrbaren Untersatz ausgebildete Gehäuse aufgesetzt werden, worauf dann nach dem Einkuppeln des Getriebes 30 das Gehäuse 39 des Rasenmähers 1 an die obere Begrenzungswand 9 des Gehäuses 3 angepreßt wird.

An der Niederhalteeinrichtung 35 greift eine verstellbare Stütze 41 an, deren anderes Ende am freien Ende des Handhabungshebels 17 des Rasenmähers 1 fixierbar ist. Es wird dadurch dieser Handhabungshebel 17 versteift, zumal ja für die Schneeräumung eine wesentlich größere Kraft auf diesen Handhabungshebel ausgeübt wird als dies beim Rasenmähen der Fall ist.

An der oberen Begrenzungswand 9 des Gehäuses 3 sind Kunststoffexzenter 24 montiert, welche je nach einzusetzendem Rasenmäher in entsprechender Anordnung am Gehäuse 3 befestigt sind. Nach dem erstmaligen Aufsetzen des Rasenmähers kann durch Verdrehen dieser Kunststoffexzenter 24 eine Feineinstellung vorgenommen werden, so daß der aufzusetzende Rasenmäher zusätzlich zentriert werden kann. Diese Anordnung ist der Fig. 2 zu entnehmen, wo der aufzusetzende Rasenmäher mit der strichlierten Linie 27 angedeutet ist.

Im Rahmen der Erfindung ist es auch möglich, die Schneeräumeinrichtung mit einem eigenen Fahrantrieb auszustatten. Eine solche Möglichkeit ist z.B. dann gegeben, wenn um eine horizontale Achse verschwenkbar am Gehäuse 3 oder aber am rückwärtigen Ende eines aufzusetzenden Rasenmähers Hebel mit an ihren freien Enden gelagerten Laufrollen oder einer Laufwalze vorgesehen sind. Solche Laufräder bzw. eine Laufwalze können bzw. kann mit angetriebenen Rädern des Rasenmähers 1 kuppelbar ausgeführt werden, wobei dann diese Laufrollen bzw. eine entsprechende Laufwalze als Antriebselemente auf der Fahrbahn abstützbar sind. Solche Laufräder bzw. eine entsprechende Laufwalze weisen dazu an ihrer Oberfläche zweckmäßig Querrillen oder Rippen auf, um die Antriebskraft auf den Untergrund übertragen zu können. Falls die Drehrichtung der Laufräder des Rasenmähers änderbar ist, können die Laufräder oder eine entsprechende Laufwalze direkt in Kontakt mit diesen Laufrädern gebracht werden. Wenn jedoch nur eine Drehrichtung der Laufräder möglich ist, sind unter Umständen Zwischenräder einzusetzen, welche die richtige Drehrichtung der Laufräder bzw. der entsprechenden Laufwalze gewährleisten.

Aus den Fig. 1 und 2 ist eine Antriebsmöglichkeit für den Verschubantrieb ersichtlich, bei der eine Antriebsscheibe 55 vorgesehen ist, welche über einen Winkeltrieb 57 mit den Laufrädern 14, 15 in Wirkverbindung steht. Die Antriebsscheibe 55 wird über einen Keilriementrieb 56 angetrieben. Bei einem solchen Fahrantrieb ist es zweckmäßig, zwischen der Motorantriebswelle und dem Keilriemenrad eine Fliehkraftkupplung 58 einzusetzen.

Bei bestimmten Rasenmähertypen könnten auf die angetriebenen Laufräder am rückwärtigen Ende des Rasenmähers 1 ringförmige Elemente aufgesetzt werden, welche dann durch den größeren Durchmesser auf der Fahrfläche aufliegen würden. Allerdings vergrößert sich dann gegenüber dem normalen Rasenmäherantrieb infolge des größeren Durchmessers des so gebildeten Laufrades die Vorschubgeschwindigkeit.

Eine weitere Verbesserung der Schneeräumeinrichtung ist durch die Anordnung eines Leitbleches 54 möglich (siehe Fig. 1, 2). Ein solches Leitblech 54 führt den Schnee vom Wurfrad 4 durch die Auswurföffnung 5 in den Auswurfkanal 12 besser ein.

Durch die erfindungsgemäßen Maßnahmen ist eine optimale Lösung zum Betrieb einer Klein-Schneeräumeinrichtung geschaffen worden, so daß Rasenmäher in den Wintermonaten für Schneeräumzwecke eingesetzt werden können, und dies ohne komplizierte Umbauarbeiten.

## Ansprüche

1. Schneeräumeinrichtung mit einem stirnseitig offenen, in Seitensicht keilförmigen, nach unten offenen Gehäuse (3) mit einem darin drehbar gelagerten Wurfrad (4) und einer Auswurföffnung (6), die in der Ebene des Wurfrades an der offenen Seite des Gehäuses vorgesehen ist und wobei zweckmäßigerweise die Seitenbegrenzungen (6,11) des Gehäuses an dessen rückwärtigen Abschluß in einen kreisbogenförmig dem Radius des Wurfrades folgenden Abschnitt (42) übergehen und das Gehäuse auf Laufrädern (14,15) verfahrbar ist und am unteren Abschlußrand der Seitenbegrenzungen Gleitkufen (19,20) ausgebildet sind, dadurch gekennzeichnet, daß oberhalb der oberen Begrenzungswand (9) des Gehäuses (3) ein von einem Schutzblech (21) überdecktes Zahnrad - oder Keilriemengetriebe (30) vorgesehen ist, das über ein elastisches Zentrierstück (29) und eine Kupplung (23) mit der Messerwelle des Antriebsmotors eines in an sich bekannter Weise aufgesetzten Rasenmähers kuppelbar ist und am Gehäuse (3) Einhängelaschen (33) zum Fixieren einer von oben an den aufgesetzten Rasenmäher (1) anpreßbaren Niederhalteeinrichtung (35) vorgesehen sind.

2. Schneeräumeinrichtung nach Anspruch 1, dadurch gekennzeichnet, daß die Einhängelaschen (33) paarweise am vorderen und rückwärtigen Bereich des Gehäuses (3) angeordnet sind und gegebenenfalls mit mehreren Durchgangsbohrungen zum verstellbaren Einhängen der Niederhalteeinrichtung (35) ausgeführt sind.

3. Schneeräumeinrichtung nach Anspruch 2, dadurch gekennzeichnet, daß die Niederhalteeinrichtung (35) zumindest im Mittelbereich bezogen auf deren horizontale Länge einen Preßteil, vorzugsweise einen Gummipuffer (40) aufweist.

4. Schneeräumeinrichtung nach einem der Ansprüche 1 bis 3, dadurch gekennzeichnet, daß an der Niederhalteeinrichtung (35) eine verstellbare Stütze (41) angreift, deren anderes Ende am freien Ende eines Handhabungshebels (17) des Rasenmähers (1) fixierbar ist.

## Claims

1. A snow-clearing device with a housing (3) which is open at the front end, is wedge-shaped when viewed from the side, is open to the bottom and has both a scoop wheel (4) which is rotatably mounted therein and a discharge opening (5) which is provided in the plane of the scoop wheel and at the open side of the housing, and at the rear end of the housing the lateral boundaries (6, 11) of the latter advantageously turning into a portion (42) following the radius of the scoop wheel in an arcuate manner and the housing being conveyable on running wheels (14, 15) and sliding runners (19, 20) being formed at the lower border-edge of the lateral boundaries, characterized in that above the upper defining wall (9) of the housing (3) there is provided a toothed wheel - or V-belt gear (30) - which is covered by a protective metal-sheet (21) and can be coupled, via a resilient centering piece (29) and a coupling (23), to the cutter shaft of the drive motor of a lawn mower attached in a manner known per se, and suspension flaps (33) are provided for fixing a clamping device (35) which can be pressed from above on the attached lawn mower (1).

2. A snow-clearing device in accordance with Claim 1, characterized in that the suspension flaps (33) are arranged in pairs at the front and the rear area of the housing (3) and are possibly constructed with a plurality of through-holes for the adjustable suspension of the clamping device (35).

3. A snow-clearing device in accordance with Claim 2, characterized in that, at least in the central area in relation to its horizontal length, the clamping device (35) has a pressing part, preferably a rubber buffer (40).

4. A snow-clearing device in accordance with any one of Claims 1 to 3, characterized in that an adjustable support (41) engages on the clamping device (35), the free end of the support being able to be fixed to the free end of a handling lever (17) of the lawn mower (1).

**Revendications**

1. Dispositif de déblaiement de la neige avec un caisson (3) ouvert vers le bas, ouvert frontalement et cunéiforme latéralement, avec une roue de projection (4) qui y est montée avec possibilité de rotation et un orifice d'éjection (5) qui est prévu dans le plan de la roue de projection sur le côté ouvert du caisson et dans lequel les limitations latérales (6, 11) du caisson se continuent efficacement à son extrémité postérieure par une section (42), suivant le rayon de la roue de projection, en forme d'arc de cercle, dans lequel le caisson peut être déplacé sur des roues (14, 15) et des patins de glissement (19, 20) sont formés au bord terminal inférieur des limitations latérales, caractérisé en ce qu'il est prévu, au-dessus de la paroi de limitation supérieure (9) du caisson (3), une roue dentée ou une transmission à courroie trapézoïdale (30), recouverte par une tôle de protection (21) qui peut être accouplée par une pièce de centrage élastique (29), et un accouplement (23) avec l'arbre à couteaux du moteur d'entraînement d'une tondeuse à gazon constituée d'une manière connue en soi et que des pattes de suspension (33) sont prévues sur le caisson (3) pour fixer un dispositif à serre-flanc (35) pouvant être pressé par le dessus sur la tondeuse à gazon (1) assemblée.

2. Dispositif de déblaiement de la neige selon la revendication 1, caractérisé en ce que les pattes de suspension (33) sont disposées par paires dans la zone antérieure et postérieure du caisson (3) et sont éventuellement pourvues de plusieurs orifices de passage permettant de régler la suspension du dispositif à serreflanc (35).

3. Dispositif de déblaiement de la neige selon la revendication 2, caractérisé en ce que le dispositif a serre-flanc (35) présente, au moins dans la zone centrale rapportée à sa longueur horizontale, une pièce de compression qui est de préférence un tampon en caoutchouc (40).

4. Dispositif de déblaiement de la neige selon l'une des revendications 1 à 3, caractérisé en ce qu'un support réglable (41) s'appuie sur le dispositif à serre-flanc (35), tandis que son autre extrémité peut être fixée à l'extrémité libre d'un levier de manoeuvre (17) de la tondeuse à gazon (1).

Fig. 1

Fig. 2

Fig. 4

Fig. 3

52

53

4

52

53

52

52

53

18

22

29

31